# EUROPEAN PATENT APPLICATION

(11) **EP 2 434 602 A2**
(43) Date of publication of application: **28.03.2012**
(21) Application number: 11181658.3
(22) Date of filing: 16.09.2011
(51) Int. Cl.: H02H 3/093, H02J 1/10

(54) **Short circuit control for high current pulse power supply**

(30) Priority: 22.09.2010 US 887559
(71) Applicant: Kidde Technologies, Inc., Wilson, NC 27896 (US)
(72) Inventor: Isaacson, Michael, Zebulon, NC North Carolina 27597 (US); Wyatt, Johnny Dewayne, Wilson, NC North Carolina 27893 (US); Moses, Junior Ghannet, Wilson, NC North Carolina 27896 (US)
(74) Representative: Hughes, Andrea Michelle

(57) **Abstract**

A power supply circuit apparatus, and method for controlling the same, includes multiple power supplies 110, 120 connected to a load via power channels 116, 126 and a controller 160. The controller detects a short circuit in the power supply based on a measured load input current.

## Description

### BACKGROUND

The present application is directed to short circuit control for high current pulse power supplies.

In applications using batteries or other stored power devices as a primary power supply, short circuit detection is typically included to determine if there is a short circuit fault in the power supply. Short circuit detection circuits can also isolate the power supply from a load when a short circuit is detected, thereby preventing the load from seeing excessive fault currents, which can interfere with load operations. Additionally, a backup power supply is often included to continue providing power to the load when the primary power supply is isolated from the load due to a short circuit fault. Systems using backup power supplies also include detection circuits for detecting a short circuit in the connected backup power supplies. The inclusion of additional detection circuits adds weight and cost to the construction of these systems.

One standard short circuit detection method uses a current sensor combined with a controller to detect when the output current of the power supply exceeds a current threshold. When the output current exceeds the current threshold, the controller determines that a short circuit is present and isolates the power supply. The threshold is set at an expected short circuit current that is higher than the current used for standard operations.

### SUMMARY

Disclosed is a method for controlling a high current pulse power supply. The method for detecting a load current uses a current sensor, and isolates a power source from a load when the load current exceeds a current magnitude threshold for a duration that is greater than an excess current duration threshold.

Also disclosed is a power supply circuit having a controller electrically coupled to a switch driver. The power supply circuit also has a plurality of power channels, with each of the power channels connecting one of multiple power sources to a load power input and each of the power channels is electrically coupled to the switch driver. The power supply circuit also has a current sensor connected to the load power input and to the controller. The current sensor is capable of detecting a load input current and communicating the load input current to the controller.

These and other features of the present disclosure can be best understood from the following specification and drawings, the following of which is a brief description.

### BRIEF DESCRIPTION OF THE DRAWINGS

Figure 1 schematically illustrates a power supply circuit for an electrical system having a primary and a backup power supply, and a short circuit detection scheme.
Figure 2 is a flowchart demonstrating a method for detecting a short circuit in a high current pulse power supply system.

### DETAILED DESCRIPTION

Some electrical systems operate using high magnitude current pulses. In such systems, the expected short circuit current can be lower than the magnitude of the high magnitude current pulses. Known short circuit detection circuits can result in false short circuit detections when a desired current has a pulse magnitude that exceeds an expected short circuit current.

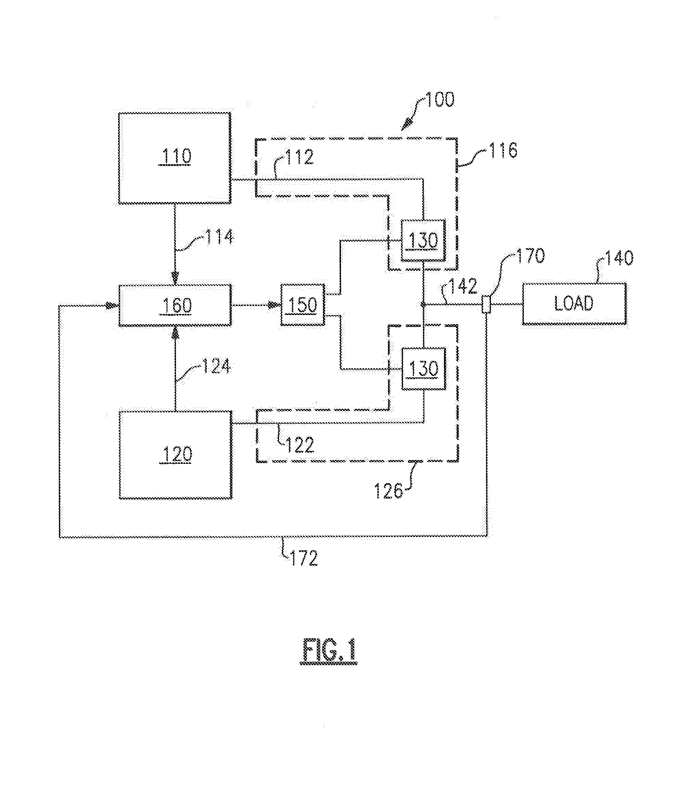

Figure 1 schematically illustrates a high current pulse power supply circuit 100. The power supply circuit 100 includes a primary power supply 110 and a secondary (backup) power supply 120. Each of the power supplies 110, 120 has an output power line 112, 122 which connects to a corresponding switching circuit 130 and may be any known type of power source. In one example, each of the power supplies 110, 120 is one or more batteries. The combination of the output power line 112, 122 and the switching circuit 130 is referred to as a power channel 116, 126. Each of the switching circuits 130 is capable of connecting the corresponding output power line 112, 122 to a load power input 142 that provides power to a load 140. The switching circuits 130 are controlled by a switch driver 150, which is, in turn, controlled by a microcontroller 160 (alternately referred to as the controller 160). A current sensor 170 monitors the current flowing into the load 140 on the load power input 142, and provides a control signal 172 to the microcontroller 160, thereby providing the magnitude of the current flowing into the load 140 to the microcontroller 160. Each of the power supplies 110, 120 also includes a control connection 114, 124 to the microcontroller 160. The control connections 114, 124 allow the controller 160 to detect power supply statistics, such as remaining power. The controller 160 can also control the power output from the power supplies 110, 120.

In standard operation each power supply 110, 120 is connected to the load 140 via a power channel 116, 126. The switching device 130 within each power channel 116, 126 is configured such that it is capable of interrupting the output power line 112, 122. Each of the power supplies 110, 120 is connected to the load power input 142 by its corresponding power channel 116, 126, thereby allowing the controller 160 to isolate any power supply 110, 120 which has a short circuit fault.

When the load 140 requires a periodic high current load spike for normal operations, standard short circuit detection techniques will falsely trip on each current spike, and are therefore inadequate, Instead, the controller 160, illustrated in Figure 1, utilizes current sensor 170 and a pair of current thresholds to determine when a short circuit exists. By way of example, the current sensor 170 can be a Hall Effect sensor.

The current sensor 170 detects the magnitude of the current at the load power input 142 and determines if the current exceeds a current magnitude threshold. The current magnitude threshold is set at an expected short circuit output current, and is tripped whenever the expected short circuit output current is exceeded. When the current magnitude threshold is exceeded, the controller 160 determines how long the current threshold has been exceeded, and compares the duration that the current magnitude threshold has been exceeded to an excess current duration threshold. The controller 160 determines that a short circuit fault is present when both the current magnitude threshold and the duration threshold are exceeded. In this way, the controller 160 can distinguish between desirable high current load spikes that exceed the expected short circuit current of the power supply 110, 120 and a continuous fault current resulting from a short circuit within the power supply 110, 120 or the load 140.

By locating the current sensor 170 at the load input, the controller 160 detects the ongoing load current regardless of which power supply 110, 120 is currently providing power to the load 140. This configuration allows for a single current sensor 170 to be used to control all of the power supplies 110, 120 in any system in which a single power supply is used to power the load 140 at a given time. Alternately, a current sensor 170 can be located at each of the power supply outputs 112, 122, with the controller 160 having a dedicated controller input for each current sensor 170.

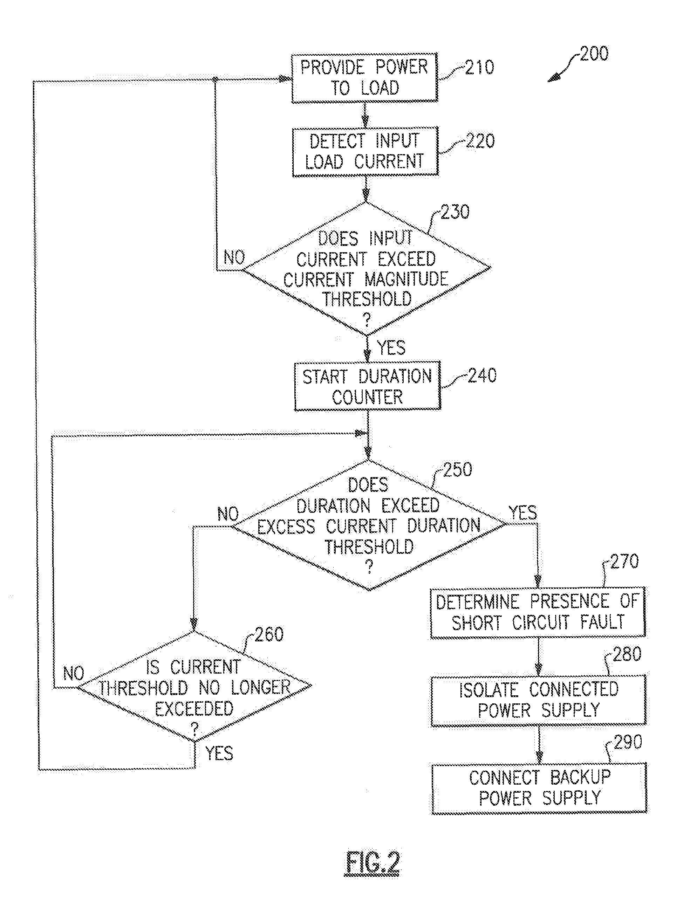

In the example of Figure 1, the controller 160 is a programmable microcontroller that has a computer readable medium capable of storing instructions for performing the method described below with regards to Figure 2. The programmable microcontroller 160 allows a user to modify the current and duration thresholds based on the power needs of the connected load 140. A programmable controller allows the same control scheme to be used if the power supplies 110, 120 are replaced with alternate power supplies, or if the desired load power profile changes. By way of example, if an initial load requires a profile of high current, extremely short, pulses the controller 160 is programmed to have a high current magnitude threshold, and an extremely low duration threshold. Alternately, if the load requires a profile having high current, medium length, pulses the controller 160 is programmed to have a high current threshold and a medium length duration threshold.

The switching mechanisms 130 illustrated in Figure 1 can be any known switching device capable of electrically isolating the connected power supplies 110, 120. An exemplary switching device 130, is an array of MOSFETs (metal-oxide-semiconductor field-effect transistor) and diodes configured according to known principles to form a MOSFET/dual diode array switch. The MOSFET/dual diode arrays receive a control input from the switch gate driver 150 that is either high or low. A high input places the array in an "on" mode and provides a connection between the power supply output 112, 122 and the input load power 142. A low input places the array in an "off" state that electrically isolates the power supply output 112, 122 from the input load power 142. It is understood that additional primary or backup power supplies can be added to the high current pulse power supply circuit 100 by adding additional switches 130, with each switch 130 controlling the connection of one additional primary or backup power supply. Furthermore, it is additionally understood that other types of switching devices can operate using a similar control scheme, and fall within this disclosure.

Figure 2 schematically illustrates a method 200 for operation of the short circuit detection and protection scheme of Figure 1. Initially the method 200 provides power to the load 140 from the primary power supply 110 in the "provide power to load" step 210. The current sensor 170 measures the input load current and reports the measured current to the controller 160 in a "detect input load current" step 220. The controller 160 then determines if the input load current exceeds a predefined current magnitude threshold in a "does input current exceed threshold" step 230. If the current magnitude threshold is not exceeded, the method restarts at the "provide power to load" step 210.

If the current magnitude threshold is exceeded, the controller 160 starts a duration counter in a "start duration counter" step 240. The duration counter can be a software counter that determines how long the input load current has exceeded the current magnitude threshold. The controller 160 checks to see if the duration has exceeded an excess current duration threshold in a "does duration exceed threshold" step 250. If the excess current duration threshold is not exceeded, the controller 160 determines if the current threshold is still exceeded in an "is current magnitude threshold no longer exceeded" step 260. If the current magnitude threshold is no longer exceeded, the controller 160 restarts the method at the "provide power to load" step 210. A condition where the current magnitude threshold was temporarily exceeded, but the excess current duration threshold was not exceeded, indicates that there was a desirable high current pulse, and not a short circuit fault.

If the current magnitude threshold is still exceeded, the controller 160 continues to determine the duration of the excess current and returns to the "does duration exceed excess current duration threshold" step 250. If the "does duration exceed excess current duration threshold" step 250 determines that the duration of the excess current has exceeded the excess current duration threshold, the controller 160 determines that a short circuit fault is present in the power supply 110 in a "determine presence of a short circuit fault" step 270.

Once a short circuit fault has been detected, the controller 160 isolates the primary power supply 110 and connects the backup power supply 120 to the input load power 142 using the procedure described above with regards to Figure 1 in an "isolate connected power supply" step 280. The controller 160 then connects the backup power supply 120 to the load 140 in a "connect backup power supply" step 290. Alternately, if the backup power supply 120 is currently connected when the short circuit fault is detected, the controller 160 can switch to the primary power supply 110, or completely isolate the power supplies 110, 120 from the load 140.

It is understood that one of skill in the art can reconfigure the above described method to accommodate a single load having multiple power supplies beyond a primary power supply and a backup power supply,

Although an example has been disclosed, a worker of ordinary skill in this art would recognize that certain modifications would come within the scope of this disclosure. For that reason, the following claims define the true scope of the invention.

## Claims

1. A method for controlling a high current pulse power supply comprising the steps of:
detecting a load current using a current sensor (170); and
isolating a power source (110, 120) from a load (140) when said load current exceeds a current magnitude threshold for a duration greater than an excess current duration threshold.

2. The method of claim 1, wherein said step of isolating said power source from said load further comprises the step of setting a first switching component to off, thereby isolating a primary power supply from a load power input.

3. The method of claim 2, wherein said step of isolating said power source from said load further comprises the step of setting a second switching component to on, thereby connecting a backup power supply to said load power input.

4. The method of claim 3, wherein said step of connecting said backup power supply to said load power input is performed after said step of isolating said primary power supply from said load power input, thereby preventing multiple power supplies from being connected to the load simultaneously.

5. The method of claim 1, wherein said step of detecting said load current comprises sensing the load current on the load power input line using a Hall Effect current sensor.

6. The method of claim 1, wherein said step of isolating said power source from said load when said load current exceeds said current magnitude threshold for said duration greater than said excess current duration threshold further comprises a controller (160) starting a duration counter when said current magnitude exceeds said current magnitude threshold.

7. The method of claim 6, wherein said step of isolating said power source from said load when said load current exceeds said current magnitude threshold for said duration greater than said excess current duration threshold further comprises comparing a duration of said duration counter to said excess current duration threshold, thereby determining when said load current exceeds the current magnitude threshold for said duration greater than the excess current duration.

8. The method of claim 6, wherein said duration counter comprises a controller software module.

9. The method of claim 1, wherein said excess current duration threshold is at least a desired current pulse duration.

10. A power supply circuit comprising:
a controller (160) electrically coupled to a switch driver (130);
a plurality of power channels (116, 126), each of said power channels connecting one of a plurality of power sources (110, 120) to a load power input and being coupled to said switch driver; and
a current sensor (170) connected to said load power input and to said controller, such that said current sensor is capable of detecting a load input current and communicating said load input current to said controller.

11. The power supply circuit of claim 10, wherein each of said power channels comprises a power supply output power line and a power switch capable of interrupting said power supply output power line.

12. The power supply circuit of claim 11, wherein each of said power switches comprises a metal-oxide-semiconductor field-effect transistor (MOSFET) / dual diode array.

13. The power supply circuit of claim 10, wherein said controller comprises a programmable microcontroller, and wherein said programmable microcontroller further comprises a computer readable medium storing instructions for causing the controller to performing the steps of detecting a load current using a current sensor and isolating a power source from a load when a load current exceeds a current magnitude threshold for a duration greater than an excess current duration threshold.

14. The power supply circuit of claim 13, wherein said programmable microcontroller further comprises a software duration counter.

15. The power supply circuit of claim 10, wherein each of said power supplies is electrically coupled to said controller via a control connection, thereby allowing said controller to control each of said power supplies.
